# EUROPÄISCHE PATENTANMELDUNG

(11) **EP 4 389 830 A1**
(43) Veröffentlichungstag der Anmeldung: **26.06.2024**
(21) Anmeldenummer: 22216251.3
(22) Anmeldetag: 22.12.2022
(51) Int. Cl.: C09D 5/08

(54) **METALLBLECH ODER -BAND MIT ZUMINDEST EINER BESCHICHTUNG AUF EINER FLACHSEITE DES METALLBLECHS ODER -BANDS UND VERFAHREN ZUR HERSTELLUNG DES METALLBLECHS ODER -BANDS**

(71) Anmelder: voestalpine Stahl GmbH, 4020 Linz (AT)
(72) Erfinder: Schatzl-Linder, Michaela, 4611 Buchkirchen (AT); Tiefenthaller, Roman, 4030 Linz (AT)
(74) Vertreter: Jell, Friedrich

(57) **Zusammenfassung**

Es ein Verfahren zum Herstellung eines verbessert elektrisch funktionalisierbaren Metallblechs oder -bands (1, 100), insbesondere aus Stahl, und das Metallblech oder -band (1, 100) mit zumindest einer Beschichtung (2) auf zumindest einer Flachseite (1a) des Metallblechs oder -bands (1, 100) gezeigt, wobei die Beschichtung (2) zumindest eine elektrisch isolierende Primerlackschicht (5) mit Korrosionsschutzpigmenten, zumindest eine auf der Primerlackschicht (5) vorgesehene elektrisch isolierende Klarlackschicht (6a, 6b) und zumindest eine auf der Klarlackschicht (6a, 6b) oder auf den Klarlackschichten (6a, 6b) vorgesehene, elektrisch isolierende und mit elektrisch isolierenden und anorganischen Pigmenten pigmentierte Lackschicht (7) aufweist.

## Beschreibung

Die Erfindung betrifft ein Metallblech oder -band, insbesondere aus Stahl, mit zumindest einer Beschichtung auf einer Flachseite des Metallblechs oder -bands und ein Verfahren zur Herstellung des Metallblechs oder -bands.

Zum Zwecke des Korrosionsschutzes organisch mehrschichtig beschichtete Metallbänder aus Stahl sind aus dem Stand der Technik bekannt. Neuerdings erfahren derartige Metallbleche oder -bänder eine elektrische Funktionalisierung. Diese Beschichtungen müssen daher auch für eine ausreichende elektrische Isolierung zwischen elektrischer Funktionalisierung und Metallblech oder -band sorgen. Trotz einer vermeintlich geschlossenen Beschichtung können dort Poren und/oder andere Ausnehmungen nicht vollständig ausgeschlossen werden, was den elektrischen Isolationswiderstand und damit die elektrische Festigkeit deutlich reduziert. Zudem weisen derartige Beschichtungen aufgrund von Pigmenten, beispielsweise für einen Korrosionsschutz des Metallblechs oder -bands eine vergleichsweise hohe relative Permittivität εᵣ auf, wodurch sich die Kapazität zwischen Metallblech- oder Band und funktionalisierter Schicht erhöht bzw. nachteilig auf die Ableitströme (gemäß ÖNORM EN 60335-1) auswirkt, und das Anwendungsgebiet solcher Metallbleche oder -bänder nachteilig einschränkt.

Die Erfindung hat sich daher ausgehend vom eingangs geschilderten Stand der Technik die Aufgabe gestellt, die Beschichtung eines Metallblechs oder -bands derart zu verändern, dass diese für eine elektrische Funktionalisierung verbessert geeignet ist.

Die Erfindung löst die gestellte Aufgabe durch die Merkmale des Anspruchs 1.

Weist die Beschichtung zumindest eine elektrisch isolierende Primerlackschicht mit Korrosionsschutzpigmenten, zumindest eine auf der Primerlackschicht vorgesehene elektrisch isolierende Klarlackschicht und zumindest eine auf der Klarlackschicht oder auf den Klarlackschichten vorgesehene, elektrisch isolierende und mit elektrisch isolierenden und anorganischen Pigmenten pigmentierte Lackschicht auf, kann dies die elektrische Festigkeit der Beschichtung deutlich erhöhen.

Insbesondere kann jene zwischen Primerlackschicht und Lackschicht vorgesehene Klarlackschicht für eine ausgezeichnete Porenfreiheit und elektrische Durchschlagsfestigkeit an der Beschichtung sorgen, was zu einer hohen elektrischen Festigkeit führen kann.

Neben der vergleichsweise hohen elektrischen Durchschlagsfestigkeit kann der erfindungsgemäße Aufbau der Beschichtung auch für eine geringe Permittivität sorgen. Das erfindungsgemäße Metallblech oder -band ist daher in einer elektrischen Funktionalisierbarkeit besonders standfest.

Dies kann dazu führen, dass höhere Werte bei einer Wechselspannungs-, Stoß- und/oder Stehspannungsbelastung erzielt werden können.

Beispielsweise kann sich damit auch erstmals die Möglichkeit eröffnen, den Einsatzbereich eines aus solch einem Halbzeug hergestellten Endprodukts auch auf den Netzspannungsbereich, beispielsweise mit 230 Volt Netzspannung, zu erweitern. Daher kann im Gegensatz zu bekannten funktionalisierbaren Metallblechen oder -bändern das erfindungsgemäße Metallblech oder -band auch für ein vergleichsweise breiteres und auch komplexeres Anwendungsgebiet geeignet sein.

Vorzugsweise weist die Primerlackschicht eine Polyurethan- oder Polyester-Basis auf, um damit eine hohe Korrosionsbeständigkeit zu ermöglichen. Auch kann solch eine Basis eine standfeste Anbindung an die Klarlackschicht sicherstellen, was die mechanische Standfestigkeit der Beschichtung erhöhen kann.

Beispielsweise kann die Primerlackschicht eine Schichtdicke im Bereich von 5 bis 30 µm aufweisen.

Die Korrosionsbeständigkeit der Primerlackschicht kann weiter erhöht werden, wenn die Primerlackschicht phosphathaltige Korrosionsschutzpigmente, insbesondere aus Zinkphosphat, aufweist. Zusätzlich oder alternativ dazu kann die Primerlackschicht anorganische Korrosionsschutzpigmente, insbesondere amorphe Kieselsäure, aufweisen. Damit kann beispielsweise eine hohe Beständigkeit im Außenbereich mit extremen klimatischen Bedingungen erreicht werden.

Weist die, insbesondere thermisch gehärtete, Klarlackschicht eine Polyurethan- oder Polyester-Basis auf, kann dies zu einer standfesten und auch kostengünstigen (beispielsweise mit einem Coil-Coating Verfahren herstellbaren) Beschichtung führen. Zudem kann vorteilhaft sein, wenn die Klarlackschicht eine Schichtdicke im Bereich von 10 bis 30 µm aufweist.

Der elektrische Isolationswiderstand sowie die elektrische Durchschlagfestigkeit kann unter konstruktiver Einfachheit weiter erhöht werden, wenn mehrere Klarlackschichten ausgeführt werden. Zugleich kann dadurch eine reduzierte Permittivität ermöglicht werden, was eine Kapazität zwischen Metallblech- oder Band und funktionalisierter Schicht vermindert. Nachteilige Ableitströme (gemäß ÖNORM EN 60335-1) können dadurch reduziert oder auch verhindert werden.

Daher können auch erfindungsgemäß größere Flächen am Metallblech oder -band elektrisch funktionalisiert werden. Beispielsweise können damit Heizanwendungen mit bis zu zwei m² Fläche realisierbar werden. Außerdem können damit Leiterbahnen selbst mit einer Leiterbahnbreite von 0,6 mm gedruckt werden, was deren Standfestigkeit der elektrischen Funktionalisierung weiter erhöht. Zudem kann durch diese mehreren Schichten an Klarlack eine höhere elektrische Spannung an der elektrischen Funktionalisierung und/oder eine Verwendung des Metallblechs oder -bands bei höheren Temperaturen ermöglicht werden.

Beispielsweise kann diese mehrschichtige Ausführung an Klarlackschichten in der Beschichtung durch ein mehrmaliges Aufbringen desselben Klarlacks geschaffen werden, beispielsweise in einem Coil-Coating Verfahren. Für vorstehenden Vorteil kann sich bereits als ausreichend herausstellen, wenn die Klarlackschicht zweischichtig ausgeführt ist.

Vorzugsweise weist die pigmentierte Lackschicht eine Polyurethan- oder Polyester-Basis auf, um an die Klarlackschicht standfest anbinden zu können.

Des Weiteren kann sich die pigmentierte Lackschicht auszeichnen, die eine Schichtdicke im Bereich von 6 bis 30 µm aufweist.

Damit kann die pigmentierte Lackschicht nicht nur als farbgebende Schicht, sondern auch als Diffusionsbarriere beispielsweise gegenüber Feuchtigkeit wirken. Diese kann so verzögert und in der Menge reduziert in darunter liegenden Schichten eindringen. Ein korrosiver Abbau, aber auch eine Zwischenschicht-Enthaftung zwischen den einzelnen Lackschichten kann so vergleichsweise signifikant reduziert bzw. gänzlich unterbunden werden.

Vorzugsweise sind die Pigmente der pigmentierten Lackschicht benetzbar. Vorstellbar ist auch, dass die Pigmente einen mittleren Partikeldurchmesser von ≤ 20 µm aufweisen, um so vergleichsweise geringe Schichtdicken an der pigmentierten Lackschicht zu ermöglichen.

Weist die pigmentierte Lackschicht als Pigment TiO₂ auf, kann dies die Standfestigkeit der elektrischen Funktionalisierung weiter verbessern. Für eine ausreichende Barrierewirkung kann beispielsweise gesorgt werden, wenn der Anteil von TiO2 in der pigmentierten Lackschicht im Bereich von 30 bis 65 Gew.-% liegt.

Zusätzlich oder alternativ kann die pigmentierte Lackschicht als Pigment Bariumsulfat (BaSO₄) auf. Der Anteil von Bariumsulfat (BaSO₄) ist vorzugsweise im Bereich von 20 bis 60 Gew.-% der pigmentierten Lackschicht. Bariumsulfat (BaSO₄) kann sich beispielsweise aufgrund der im Vergleich mit anderen Füllstoffen, beispielsweise TiO₂, verminderten Permittivität auszeichnen, was die Kapazität zwischen Metallblech- oder Band und funktionalisierter Schicht vermindern bzw. nachteilige Ableitströme reduzieren kann.

Die elektrische Funktionalisierbarkeit der Beschichtung kann weiter verbessert werden, wenn die erste relative Permittivität εᵣ der Primerlackschicht > der zweiten relativen Permittivität εᵣ der Klarlackschicht ist. Dies weiter verbessert, wenn die zweite relative Permittivität εᵣ der Klarlackschicht < der dritten relativen Permittivität εᵣ der Lackschicht ist.

Vorzugsweise ist die erste relative Permittivität εᵣ im Bereich von 4 bis 6. Beispielsweise ist die zweite relative Permittivität εᵣ < 3. Insbesondere liegt die dritte relative Permittivität εᵣ im Bereich von 6 bis 7.

Des Weiteren kann vorgesehen sein, dass die Beschichtung zumindest eine auf der pigmentierten Lackschicht vorgesehenen elektrischen Isolationslackschicht mit einer Acrylat- oder Epoxy- oder Styrol-Basis aufweist. Die Beschichtung kann auch mehrere aneinander anschließende Schichten von dieser Isolationslackschicht aufweisen. Vorzugsweise ist die elektrische Isolationslackschicht UV-gehärtet und/oder lösungsmittelfrei. Solche UV-härtende Isolationslacksysteme können sich beispielsweise durch eine verminderte Neigung in einer Porenbildung auszeichnen, was die Durchschlagfestigkeit der Beschichtung weiter verbessern kann.

Dies insbesondere, wenn die Isolationslackschicht mit einer Schichtdicke im Bereich von 10 bis 100 µm vorgesehen ist.

Beispielsweise ist die Isolationslackschicht eine UV-vernetzende Klarlackschicht.

Eine standfeste elektrische Funktionalisierung kann geschaffen werden, wenn die Beschichtung zumindest eine elektrisch leitfähige Schicht, beispielsweise einen elektrischen Leiter, aufweist, wobei die elektrisch leitfähige Schicht auf der pigmentierten Lackschicht vorgesehen ist. Beispielsweise kann dies mit vergleichsweise geringem Aufwand ermöglicht werden, wenn die elektrisch leitfähige Schicht aufgedruckt ist. Auch kann die elektrisch leitfähige Schicht

Vorzugsweise schließt die elektrisch leitfähige Schicht an der pigmentierten Lackschicht oder an der Isolationslackschicht an.

Die Standfestigkeit einer elektrischen Funktionalisierung kann weiter erhöht werden, wenn die Beschichtung eine Deckschicht aufweist, die zumindest die elektrisch leitfähige Schicht abdeckt. Diese Abdeckung kann beispielsweise vollständig sein.

Vorzugsweise sind die Primerlackschicht, die Klarlackschicht oder die Klarlackschichten, die pigmentierte Lackschicht und gegebenfalls die Deckschicht vollflächig auf der Flachseite des Metallblechs oder -bands vorgesehen.

Die elektrisch leitfähige Schicht kann bereichsweise auf der Flachseite des Metallblechs oder -bands vorgesehen sein, wobei auch die gegebenfalls vorgesehene Isolationslackschicht kann bereichsweise auf der Flachseite des Metallblechs oder - bands vorgesehen sein.

Die Erfindung hat sich zudem die Aufgabe gestellt, ein Verfahren zu schaffen, mit dem reproduzierbar ein elektrisch funktionalisierbares Metallblech oder -band hergestellt werden kann. Außerdem soll das Verfahren einfach handhabbar sein.

Die Erfindung löst die gestellte Aufgabe durch die Merkmale des Anspruchs 16.

Ein für eine elektrische Funktionalisierung besonders geeignetes Metallblech oder -band kann reproduzierbar hergestellt werden, indem das Aufbringen der Beschichtung umfasst:
Aufbringen eines aushärtbaren polymeren Primerlacks auf eine Flachseite des Metallblechs mithilfe eines Walzenauftrags und thermisches Härten des Primerlacks zur Ausbildung der elektrisch isolierenden Primerlackschicht,
Aufbringen oder mehrmaliges Aufbringen eines aushärtbaren polymeren Klarlacks mithilfe eines Walzenauftrags auf die Primerlackschicht (5) und
thermisches Härten des Klarlacks oder jeweiliges thermisches Härten der aufgebrachten Klarlacke zur Ausbildung der elektrisch isolierenden Klarlackschicht oder der elektrisch isolierenden Klarlackschichten und
Aufbringen eines aushärtbaren polymeren und pigmentierten Lacks auf die Klarlackschicht oder auf die Klarlackschichten mithilfe eines Walzenauftrags und thermisches Härten des pigmentierten Lacks zur Ausbildung der elektrisch isolierenden und pigmentierten Lackschicht.
Zudem kann ein Walzenauftrag ein vergleichsweise einfach handhabbares Verfahren ermöglichen.

Die elektrische Funktionalisierbarkeit des Metallblechs oder -bands kann weiter erhöht werden, wenn das Verfahren ein Aufbringen eines aushärtbaren, polymeren und elektrisch isolierenden Isolationslacks auf die pigmentierte Lackschicht mithilfe eines Siebdruckauftrags und UV-Härten des Isolationslacks zur Ausbildung der Isolationslackschicht umfasst.

Das Verfahren kann ein Aufbringen einer funktionalen Schicht mit umfassen, um damit das Metallblech oder -band elektrisch zu funktionalisieren. Dies in dem das Aufbringen der Beschichtung zusätzlich ein Aufbringen, insbesondere Aufdrucken, einer elektrisch leitfähigen Schicht auf die pigmentierte Lackschicht umfasst. Dieses Aufbringen auf die pigmentierte Lackschicht kann an die pigmentierte Lackschicht oder an die Isolationslackschicht sein, die sich auf der pigmentierten Lackschicht befindet.

Die funktionalisierte Schicht des Metallblechs oder -bands kann besonders geschützt werden, wenn auf die elektrisch leitfähige Schicht (3) ein Decklack aufgebracht und zur Ausbildung der Deckschicht gehärtet wird.

In den Figuren ist beispielsweise der Erfindungsgegenstand anhand eines Ausführungsbeispiels näher dargestellt. Es zeigen
- Fig. 1: eine abgerissene Schnittansicht auf ein erstes Metallband quer zur Längsrichtung nach einem ersten Ausführungsbeispiel und
- Fig. 2: eine abgerissene Schnittansicht auf ein zweites Metallband quer zur Längsrichtung nach einem zweiten Ausführungsbeispiel.

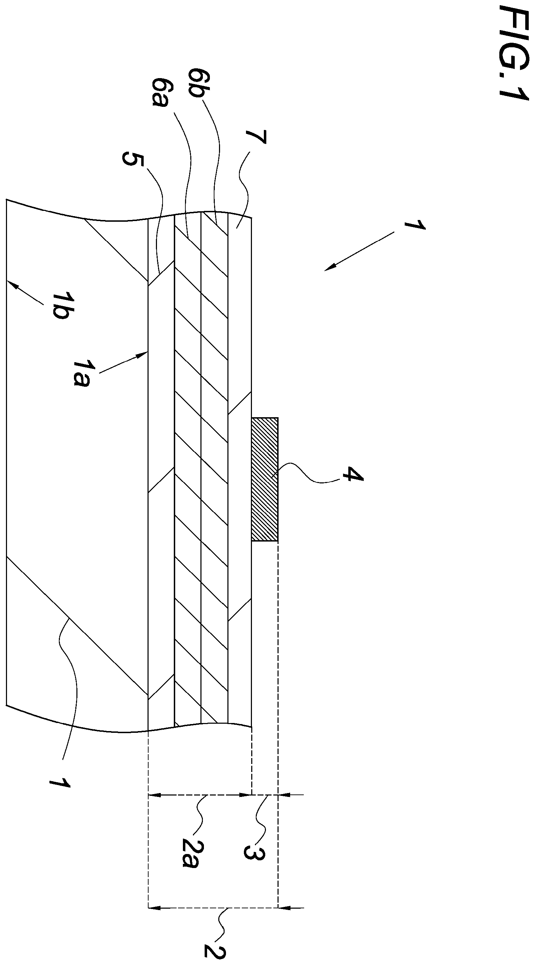

Das nach Fig. 1 dargestellte erste Metallband 1 aus Stahl weist eine Beschichtung 2 mit einer elektrisch leitfähige Schicht 3 zur elektrischen Funktionalisierung auf, von der ein aufgedruckter elektrischer Leiter 4 aus einer Paste bestehend aus leitfähigen Silberpartikeln dargestellt worden ist. Die Beschichtung 2 ist auf einer Flachseite 1a des Metallbands 1 bereichsweise vorgesehen, wobei auch die gegenüberliegende Flachseite 1b beispielsweise aus Gründen des Korrosionsschutzes organisch beschichtet ist, was nicht näher dargestellt worden ist.

Erfindungsgemäß ist diese Beschichtung 2 mehrlagig ausgebildet und weist eine Primerlackschicht 5, zwei Klarlackschichten 6a, 6b und eine pigmentierte Lackschicht 7, die beispielsweise als Diffusionsbarriere wirkt, auf. Primerlackschicht 5, Klarlackschichten 6a, 6b und pigmentierte Lackschicht 7 sind auf der Flachseite 1a des Metallblechs oder -bands 1 vollflächig vorgesehen.

Nach Fig. 1 schließt die elektrisch leitfähige und aufgedruckte Schicht 3 an die pigmentierte Lackschicht 7 an.

Die Primerlackschicht 5 schließt an die Flachseite 1a des Metallbands 1, nämlich an dessen nicht dargestellte Verzinkung, zum Beispiel aus einer Zn-Al-Legierung, an. Diese 10 µm in der Schichtdicke ausgebildete Primerlackschicht 5 weist phosphathaltige Korrosionsschutzpigmente, aus Zinkphosphat, auf, was zu einer ersten relativen Permittivität εᵣ von ca. 5 führt. Andere Korrosionsschutzpigmente sind vorstellbar, beispielsweise amorphe Kieselsäure, um damit die erste relative Permittivität εᵣ der Primerlackschicht weiter zu reduzieren und so die Ableitströme der Beschichtung zu reduzieren.

Der Primer ist aus einem Polyurethan Polymer aufgebaut mit einem Festkörperanteil von 60 Gewichts %. Die Nassschichtdichte beträgt 1,18 g/cm³ bei einer Ergiebigkeit von 52 g/m².

An diese Primerlackschicht 5 schließt die erste Klarlackschicht 6a an. Diese erste Klarlackschicht 6a besteht aus einem thermisch gehärteten Klarlack mit einer Polyurethan-Basis, was geschlossene und weitgehend porenfreie Schichten ermöglicht. Die elektrische Durchschlagsfähigkeit und der elektrische Isolationswiderstand wird durch ein zweimaliges Aufbringen eines aushärtbaren polymeren Klarlacks mithilfe eines Walzenauftrags auf die Primerlackschicht und zweimaliges thermisches Härten jeweils des aufgebrachten Klarlacks erreicht, was auf der ersten Klarlackschicht 6a eine zu dieser gleichen zweiten Klarlackschicht 6b erzeugt. Mit diesem mehrmaligen, nämlich zweimaligen, Aufbringen können durchgehende Poren durch die beiden Klarlackschichten 6a, 6b standfest vermieden werden.

Diese Klarlackschichten 6a, 6b sind ebenso -wie der Primerlack- aus einem Polyurethan Bindemittel als Basis aufgebaut. Der Festkörperanteil liegt bei 45 Gewichts-%. Die Nasslackdichte beträgt 1,05 g/cm³ bei einer Ergiebigkeit von 27 g/m². Beide Klarlackschichten 6a, 6b sind pigmentfrei und füllstofffrei.

Mit einer Schichtdicke von 15 µm des ersten Klarlacks 6a bzw. jeder Klarlackschicht 6a, 6b kann auch eine vergleichsweise hohe elektrische Durchschlagsfestigkeit erreicht werden. Dies bei unter anderem auch mit einer vergleichsweise niedrigen zweiten relativen Permittivität εᵣ von ca. 2 jeder Klarlackschicht 6a, 6b.

An dieser zweiten Klarlackschicht 6b ist eine pigmentierte Lackschicht 7 vorgesehen, wie in Fig. 1 zu erkennen ist. Die pigmentierte Lackschicht 7 weist eine PolyurethanBasis und eine Schichtdicke von 20 µm auf. Pigmente, nämlich TiO₂, mit einem Pigmentanteil in der pigmentierten Lackschicht 7 von 61 Gew.-% bilden damit beispielsweise auch eine Diffusionsbarriere aus.

Daher kann eine relativ geringe Permittivität εᵣ von ca. 7 erreicht werden. Die Nassschichtdichte beträgt 1,37 g/cm³ bei einer Ergiebigkeit von 63 g/m².

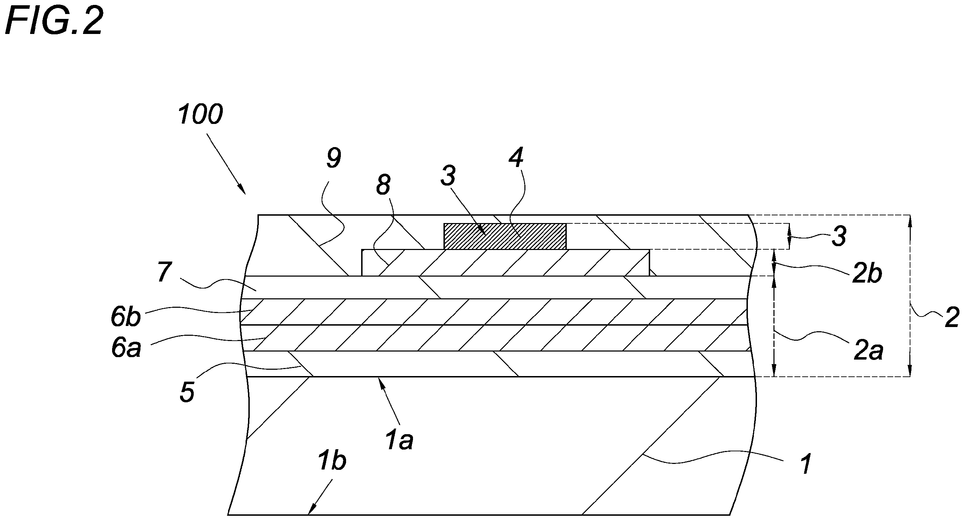

Vorstehende Vorteile können von einem zweiten nach Fig. 2 dargestellten zweiten Metallband 100 aus Stahl weiter verbessert werden. Der hier dargestellte Schichtaufbau weist zusätzlich zum Schichtaufbau der Fig. 1 auf der pigmentierten Lackschicht 7 eine elektrische Isolationslackschicht 8 auf. Die elektrische Isolationslackschicht 8 weist eine UV-gehärtete Acrylat-Basis und eine Schichtdicke von 30 µm auf und ist auf der Flachseite 1a des Metallblechs oder -bands 1 bereichsweise vorgesehen, nämlich unterhalb der elektrisch leitfähigen Schicht 3. Wie in Fig. 2 dargestellt, steht diese elektrische Isolationslackschicht 8 beispielsweise seitlich geringfügig der elektrisch leitfähigen Schicht 3 vor.

Zum Schutz der elektrisch leitfähigen Schicht 3 ist über dieser eine Deckschicht 9 aus Polyurethan mit einer Schichtdicke von 60 µm vorgesehen. Diese Deckschicht 9 kann von einem aufgetragenen Lack, einem Pulverlack, einer Folie etc, ausgebildet werden.

Zum Unterschied zur Fig. 2 ist nach Fig. 1 der elektrische Leiter 4 als elektrisch leitfähige Schicht 3 an die pigmentierte Lackschicht 7 Fig.1 aufgedruckt. Fig. 1 kann zudem auch noch eine nicht näher dargestellte Deckschicht 9, wie zu Fig. 2 dargestellt und beschrieben, aufweisen.

Als elektrisch leitfähige Schicht 3 ist beispielsweise ein elektrischer Leiter 4, eine elektrische Leiterbahn, ein elektrischer Kontakt, eine Elektrode, ein Heizwiderstand, eine piezoelektrische Schicht etc. vorstellbar.

Die erfindungsgemäßen Vorteile sind aus den Tabellen 1 und 2 im Vergleich mit einem Stahlblech A aus dem Stand der Technik zu erkennen:

### Stahlblech A (Stand der Technik):

Stahlblech A weist eine Beschichtung, bestehend aus einer Primerlackschicht, einer auf der Primerlackschicht aufgedruckten elektrischen Leiter 4 aus einer Paste mit Silberpartikel und einer über dem elektrischen Leiter 4 vorgesehenen Schutzlackschicht, auf. Die Primerlackschicht besteht aus einem Polyesterpolymer und weist eine Schichtdicke von 6 µm auf. Die Schutzlackschicht besteht ebenso aus einem Polyesterpolymer und weist eine Schichtdicke von 20 µm auf. Dies ergibt eine Schichtdicke von 26 µm zwischen Metallblech 1 und elektrischen Leiter.

### Stahlblech B (erfindungsgemäß):

Das erfindungsgemäße Stahlblech B entspricht im Aufbau dem nach Fig. 1 dargestellte Metallband 1 aus Stahl. Die Schichtdicke des organischen Teilabschnitts 2a der Beschichtung 2 zwischen Metallblech 1 und elektrischen Leiter 4 beträgt in diesem Ausführungsbeispiel 60 µm.

### Stahlblech C (erfindungsgemäß):

Das erfindungsgemäße Stahlblech C entspricht im Aufbau dem nach Fig. 2 dargestellte Metallband 100 aus Stahl. Die Schichtdicke der organischen Teilabschnitte 2a und 2b der Beschichtung 2 zwischen Metallblech 1 und elektrischem Leiter 4 beträgt in diesem Ausführungsbeispiel 90 µm.

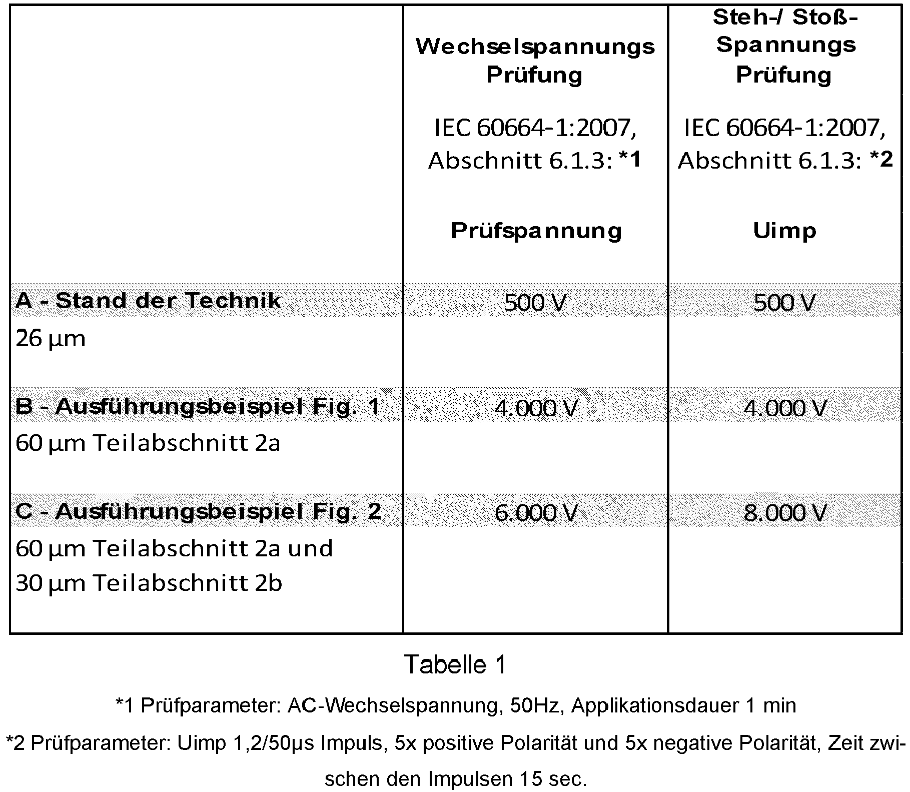

Wie in Tabelle 1 erkannt werden kann, wurde am Stahlblech B und C eine erhebliche Steigerung der elektrischen Festigkeit bei der Steh-/Stoßspannungsprüfung und der Wechselspannungsprüfung gegenüber jenen aus dem Stand der Technik bekannten Stahlblech A erreicht. Damit ist das erfindungsgemäße Stahlblech B bzw. C standfest elektrisch funktionalisierbar.

Dies aufgrund der erfindungsgemäßen Beschichtung mit einem mehrlagigen Schichtaufbau. Damit sind nämlich offene Poren und/oder potenzielle Fehlstellen so weit fertigungstechnisch beherrschbar auszuschließen, um einen elektrischen Kurzschluss auszuschließen.

Des Weiteren zeichnet sich dieser erfindungsgemäße Mehrschichtaufbau mit seiner vergleichsweise hohen elektrischen Festigkeit dadurch aus, Funktionalisierungen im Spannungsbereich einer Netzspannung (z. B.: 230V) zu ermöglichen. So konnte der erfindungsgemäße Aufbau der Isolationsschicht aus der Primerlackschicht, der zusätzlichen Applikation von zwei weiteren Klarlackschichten 6a, 6b und einer abschließenden pigmentierten Lackschicht 7 eine ausreichend hohe elektrische Isolierung erzielen. Dies unter anderem durch Veränderungen im Schichtdesign, um die Permittivität zu reduzieren sowie die Durchschlagsfestigkeit zu erhöhen.

Die erfindungsgemäßen Schichtaufbauten der Beschichtungen 2 nach Fig. 1 und Fig. 2 sorgen für eine signifikante Verbesserung hinsichtlich der Durchschlagfestigkeit. Damit ist es möglich auch Anwendungen mit höheren Spannungen als Kleinspannungen (z. B.: bis 48V) zu realisieren. Dies wurde unter anderem durch eine signifikante Reduktion von Poren in diesen jeweiligen Einzelschichten ermöglicht.

Der vorteilhafte Einfluss der erfindungsgemäßen Teilabschnitte 2a, 2b der Beschichtungen 2 auf die Permittivität und somit auf die zur elektrischen Funktionalisierung (z. B.: zur Widerstandsheizung) verwendbare Fläche des Stahlblechs kann aus Tabelle 2 entnommen werden.

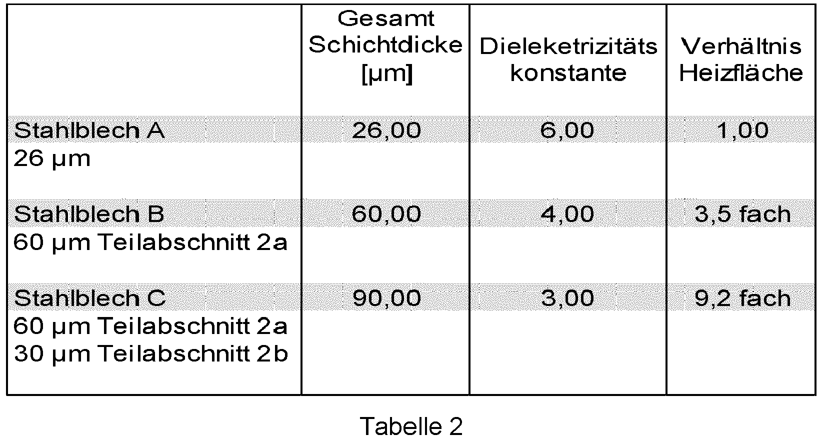

Bereits bei Verwendung der thermisch härtenden Klarlackschicht 6 gemäß Fig. 1 kann eine um den Faktor 3,5 größere Fläche, verglichen zum Stand der Technik, mit leitfähigen Strukturen vorgehen werden. Ergänzt man in einem weiteren Schritt noch mit der UV-vernetzende Klarlackschicht als Isolationslackschicht 8 nach Fig. 2. kann man eine um den Faktor 9,2 größere Fläche, verglichen mit dem Stand der Technik, verwendet werden.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Metallblech oder -band, insbesondere aus Stahl, mit zumindest einer Beschichtung (2) auf zumindest einer Flachseite (1a) des Metallblechs oder -bands (1, 100), wobei die Beschichtung (2)
zumindest eine elektrisch isolierende Primerlackschicht (5) mit Korrosionsschutzpigmenten,
zumindest eine auf der Primerlackschicht (5) vorgesehene elektrisch isolierende Klarlackschicht (6a, 6b) und
zumindest eine auf der Klarlackschicht (6a, 6b) oder auf den Klarlackschichten (6a, 6b) vorgesehene, elektrisch isolierende und mit elektrisch isolierenden und anorganischen Pigmenten pigmentierte Lackschicht (7)
aufweist.

2. Metallblech oder -band nach Anspruch 1, **dadurch gekennzeichnet, dass** die Primerlackschicht (5) eine Polyurethan- oder Polyester-Basis und/oder eine Schichtdicke im Bereich von 5 bis 30 µm aufweist.

3. Metallblech oder -band nach Anspruch 1 oder 2, **dadurch gekennzeichnet, dass** die Primerlackschicht (5) phosphathaltige Korrosionsschutzpigmente, insbesondere aus Zinkphosphat, und/oder anorganische Korrosionsschutzpigmente, insbesondere amorphe Kieselsäure, aufweist.

4. Metallblech oder -band nach einem der Ansprüche 1 bis 3, **dadurch gekennzeichnet, dass** die, insbesondere thermisch gehärtete, Klarlackschicht (6a, 6b) eine Polyurethan- oder Polyester-Basis und/oder eine Schichtdicke im Bereich von 10 bis 30 µm aufweist.

5. Metallblech oder -band nach einem der Ansprüche 1 bis 4, **dadurch gekennzeichnet, dass** auf der Primerlackschicht (5) mehrere, insbesondere zwei, aneinander anschließende Klarlackschichten (6a, 6b) vorgesehen sind und/oder dass die Klarlackschicht (6a, 6b) oder die Klarlackschichten (6a, 6b) frei von Füllstoffen und/oder frei von, insbesondere deckenden, Pigmenten ist oder sind.

6. Metallblech oder -band nach einem der Ansprüche 1 bis 5, **dadurch gekennzeichnet, dass** die pigmentierte Lackschicht (7) eine Polyurethan- oder Polyester-Basis und/oder eine Schichtdicke im Bereich von 6 bis 30 µm aufweist.

7. Metallblech oder -band nach einem der Ansprüche 1 bis 6, **dadurch gekennzeichnet, dass** die Pigmente der pigmentierten Lackschicht (7) benetzbar sind und/oder einen mittleren Partikeldurchmesser von ≤ 20 µm aufweisen.

8. Metallblech oder -band nach einem der Ansprüche 1 bis 7, **dadurch gekennzeichnet, dass** die pigmentierte Lackschicht (7) als Pigment
TiO₂, vorzugsweise im Bereich von 30 bis 65 Gew.-%, und/oder
Bariumsulfat (BaSO₄), vorzugsweise im Bereich von 20 bis 60 Gew.-%, aufweist.

9. Metallblech oder -band nach einem der Ansprüche 1 bis 8, **dadurch gekennzeichnet, dass** die erste relative Permittivität εᵣ der Primerlackschicht (5) > der zweiten relativen Permittivität εᵣ der Klarlackschicht (6a, 6b) ist und/oder dass die zweite relative Permittivität εᵣ der Klarlackschicht (6a, 6b) < der dritten relativen Permittivität εᵣ der pigmentierten Lackschicht (7) ist.

10. Metallblech oder -band nach Anspruch 9, **dadurch gekennzeichnet, dass** die erste relative Permittivität εᵣ im Bereich von 4 bis 6 und/oder die zweite relative Permittivität εᵣ < 3 und/oder die dritte relative Permittivität εᵣ im Bereich von 6 bis 7 liegt oder liegen.

11. Metallblech oder -band nach einem der Ansprüche 1 bis 10, **dadurch gekennzeichnet, dass** die Beschichtung (2) zumindest eine, insbesondere mehrere, auf der pigmentierten Lackschicht (7) vorgesehene elektrische Isolationslackschicht (8) mit einer, insbesondere UV-gehärteten, Acrylat- oder Epoxy- oder Styrol-Basis und/oder einer Schichtdicke im Bereich von 10 bis 100 µm aufweist.

12. Metallblech oder -band nach einem der Ansprüche 1 bis 11, **dadurch gekennzeichnet, dass** die Beschichtung (2) zumindest eine elektrisch leitfähige Schicht (3), insbesondere einen elektrischen Leiter (4), aufweist, welche elektrisch leitfähige Schicht (3) auf der pigmentierten Lackschicht (7) vorgesehen, insbesondere aufgedruckt, ist.

13. Metallblech oder -band nach Anspruch 12, **dadurch gekennzeichnet, dass** die elektrische leitfähigen Schicht (3) an der pigmentierten Lackschicht (7) oder an der Isolationslackschicht (8) anschließend vorgesehen ist.

14. Metallblech oder -band nach Anspruch 12 oder 13, **dadurch gekennzeichnet, dass** die Beschichtung (2) eine Deckschicht (9) aufweist, die zumindest die elektrisch leitfähige Schicht (3) abdeckt.

15. Metallblech oder -band nach einem der Ansprüche 1 bis 14, **dadurch gekennzeichnet, dass** die Primerlackschicht (5), die Klarlackschicht (6a, 6b), die pigmentierte Lackschicht (7) und gegebenenfalls die Deckschicht (9) vollflächig auf der Flachseite (1a) des Metallblechs oder -bands (1, 100) vorgesehen sind und/oder dass die elektrisch leitfähige Schicht (3) und gegebenfalls die Isolationslackschicht (8) bereichsweise auf der Flachseite (1a) des Metallblechs oder -bands (1, 100) vorgesehen sind.

16. Verfahren zur Herstellung eines Metallblechs oder -bands nach einem der Ansprüche 1 bis 15, bei dem auf eine Flachseite (1a) des Metallblechs oder -bands (1, 100) die Beschichtung (2) aufgebracht wird, wobei das Aufbringen der Beschichtung (2) umfasst:
Aufbringen eines aushärtbaren polymeren Primerlacks auf eine Flachseite (1a) des Metallblechs oder -bands mithilfe eines Walzenauftrags und thermisches Härten des Primerlacks zur Ausbildung der elektrisch isolierenden Primerlackschicht (5),
Aufbringen oder mehrmaliges Aufbringen eines aushärtbaren polymeren Klarlacks mithilfe eines Walzenauftrags auf die Primerlackschicht (5) und thermisches Härten des Klarlacks oder jeweiliges thermisches Härten der aufgebrachten Klarlacke zur Ausbildung der elektrisch isolierenden Klarlackschicht (6a, 6b) oder der elektrisch isolierenden Klarlackschichten (6a, 6b) und
Aufbringen eines aushärtbaren polymeren und pigmentierten Lacks auf die Klarlackschicht (6a, 6b) oder auf die Klarlackschichten (6a, 6b) mithilfe eines Walzenauftrags und thermisches Härten des pigmentierten Lacks zur Ausbildung der elektrisch isolierenden und pigmentierten Lackschicht (7).

17. Verfahren nach Anspruch 16, **dadurch gekennzeichnet, dass** das Aufbringen der Beschichtung (2) zusätzlich umfasst:
Aufbringen eines aushärtbaren, polymeren und elektrisch isolierenden Isolationslacks auf die pigmentierte Lackschicht (7) mithilfe eines Siebdruckauftrags und UV-Härten des Isolationslacks zur Ausbildung der Isolationslackschicht (8).

18. Verfahren nach Anspruch 16 oder 17, **dadurch gekennzeichnet, dass** das Aufbringen der Beschichtung (2) zusätzlich umfasst:
Aufbringen, insbesondere Aufdrucken, einer elektrisch leitfähigen Schicht (3) auf die pigmentierte Lackschicht (7), insbesondere an die pigmentierte Lackschicht (7) oder an die Isolationslackschicht (8).

19. Verfahren nach Anspruch 18, **dadurch gekennzeichnet, dass** auf die elektrisch leitfähige Schicht (3) ein Decklack (9) aufgebracht und zur Ausbildung der Deckschicht (9) gehärtet wird.
